Europäisches Patentamt

(19) European Patent Office

Office européen des brevets

(11) Numéro de publication : **0 296 054 B1**

# (12) FASCICULE DE BREVET EUROPEEN

(45) Date de publication du fascicule du brevet :
**21.08.91 Bulletin 91/34**

(51) Int. Cl.⁵ : **H02H 9/06, H05K 9/00**

(21) Numéro de dépôt : **88401468.9**

(22) Date de dépôt : **14.06.88**

(54) Dispositif de protection d'un équipement électronique contre les fortes impulsions élecromagnétiques, notamment dues à la foudre.

(30) Priorité : 16.06.87 FR 8708361
16.06.87 FR 8708362

(43) Date de publication de la demande :
21.12.88 Bulletin 88/51

(45) Mention de la délivrance du brevet :
21.08.91 Bulletin 91/34

(84) Etats contractants désignés :
CH DE GB IT LI NL

(56) Documents cités :
EP-A- 0 056 275
EP-A- 0 152 127
FR-A- 2 563 058
FR-A- 2 576 471

(73) Titulaire : COMMISSARIAT A L'ENERGIE
ATOMIQUE Etablissement de Caractère
Scientifique Technique et Industriel
31/33, rue de la Fédération
F-75015 Paris (FR)

(72) Inventeur : Climent, Jean-Pierre
7, rue Max Jacob
F-91100 Saint Germain des Corbeilles (FR)
Inventeur : Tronel, Jean-Claude
5, rue de Cascogne
F-91220 Bretigny sur Orge (FR)

(74) Mandataire : Mongrédien, André et al
c/o BREVATOME 25, rue de Ponthieu
F-75008 Paris (FR)

## Description

La présente invention a pour objet un dispositif de protection d'un équipement électronique contre les fortes impulsions électromagnétiques. Le dispositif de l'invention vise à la protection contre des impulsions électromagnétiques intenses telles que celles produites par la foudre. A fortiori, le dispositif de l'invention peut être utilisé pour se protéger d'un électromagnétique perturbateur moins intense.

De manière générale, on peut considérer que les effets perturbateurs sur les équipements électroniques sont provoqués par deux causes qui sont d'une part le couplage directe d'un champ électromagnétique avec l'équipement électronique et, d'autre part, l'injection par les liaisons (de communication, d'alimentation électrique, ...) dont est pourvu cet équipement. Cette injection est elle-même due au couplage entre le champ électromagnétique et la liaison.

Le couplage direct entre le champ électromagnétique et l'équipement électronique peut être éliminé, de manière connue, en disposant l'équipement électronique à protéger dans une enceinte radio-électriquement protégée (cage de Faraday). Cette protection est toutefois insuffisante si l'équipement électronique disposé dans la cage de Faraday est relié à un autre équipement extérieur à la cage de Faraday par une liaison non protégée.

L'injection d'une impulsion électromagnétique sur la liaison se traduit par une impulsion parasite de tension et/ou de courant de valeur maximale très importante. Dans le cas de la foudre, la tension peut atteindre 10 kV et l'intensité 20 kA. Une telle impulsion se propageant sur une liaison atteint l'équipement sur une entrée ou il reçoit normalement un signal de tension très inférieur, qui est de l'ordre de 500 volts pour une liaison d'alimentation électrique et de quelques dizaines de volts pour une liaison téléphonique ou informatique. Une telle impulsion a donc de fortes chances d'endommager très sérieusement l'équipement électronique.

On connaît déjà, notamment par le document FR-A-2563058 déposé le 17 avril 1984 au nom de la demanderesse, un dispositif de protection d'un équipement électronique contre les fortes impulsions électromagnétiques. Ce dispositif est placé entre une liaison et l'équipement à protéger. Il se compose d'un élément non linéaire, de type écrêteur, pour dériver de la liaison vers la terre le maximum d'intensité de l'impulsion électromagnétique, et un moyen de filtrage pour écouler également du courant et/ou de l'énergie non dérivé à l'écrêtage, mais aussi pour atténuer le niveau de tension de l'impulsion après l'écrêtage.

Ce dispositif permet la protection contre les impulsions électromagnétiques intenses dont le front de montée est très rapide, telle qu'une impulsion causée par la foudre.

Alors que le dispositif décrit dans le document FR-A-2563058 est destiné à être disposé entre une ligne d'alimentation basse tension et l'équipement électronique à protéger, et n'a donc pratiquement pas de contraintes sur sa bande passante, le dispositif objet de la présente invention est destiné à être disposé aussi bien entre une ligne d'alimentation et l'équipement électronique qu'entre une ligne de transmission de signaux et l'équipement électronique. Le dispositif de l'invention est donc conçu pour ne pas entraîner un affaiblissement d'un signal utile, notamment en ce qui concerne son amplitude et son spectre de fréquence.

On pourra se reporter également à l'art antérieur constitué pour les documents FR-A-2563058 EP-A-0056275, FR-A-2.576471.

De manière précise, l'invention a pour objet un dispositif de protection d'un équipement électronique contre les fortes impulsions électromagnétiques, tel que décrit dans la revendication 1.

Selon l'invention, le dispositif est prévu pour que le filtre passe-bas de la première cellule d'écrêtage créé pour une fréquence de résonance supérieure à la fréquence maximale contenue dans les signaux normalement transmis sur la ligne, une surtension aux bornes du second écrêteur, ce second écrêteur étant du type tripolaire ou à gâchette.

Avantageusement, le filtre passe-bas de la première cellule d'écrêtage est un filtre en L.

Avantageusement, les écrêteurs sont des éclateurs.

Avantageusement la deuxième cellule d'écrêtage comprend en outre un filtre passe-haut, composé en série d'une inductance, d'un condensateur et d'une inductance, connecté entre l'entrée de la cellule d'écrêtage principale et la terre, la gâchette du second éclateur étant reliée au point commun entre le condensateur et l'inductance.

Dans le cas où les lignes transportent des signaux de fréquence supérieure à 1 MHz telles que des lignes transportant des signaux numériques, la cellule de filtrage comporte en outre un moyen de commutation de la fréquence de coupure du filtre passe-bas en série avec ce dernier.

Avantageusement le moyen de commutation comporte en série un condensateur et une inductance disposés entre la ligne et la terre, et des éléments à seuil de conduction aux bornes de l'inductance, le seuil étant fixé de manière qu'il y ait conduction desdits éléments lorsque le signal sur la ligne a une amplitude supérieure à l'amplitude maximale des signaux normalement transmis sur la ligne.

On utilise comme éléments à seuil des diodes.

Selon une mode préféré de réalisation, le premier écrêteur, l'ensemble constitué du filtre de la cellule d'écrêtage principale et du second écrêteur, et la cellule de filtrage sont chacun contenus dans une enceinte radio-électriquement isolée.

Les caractéristiques et avantages de l'invention ressortiront mieux de la description qui va suivre, donnée à titre illustratif mais non limitatif, en référence aux dessins annexés sur lesquels :

— la figure 1 est un graphe illustrant le spectre en fréquence de différents types de signaux,

— la figure 2 représente schématiquement un mode de réalisation du dispositif de l'invention,

— la figure 3 illustre une variante de réalisation de la cellule d'écrêtage dans laquelle l'écrêteur se compose d'un éclateur et d'une varistance,

— la figure 4 illustre une variante de réalisation du dispositif de l'invention dans lequel les éléments du dispositif sont disposés dans différentes enceintes radio-électriquement isolées, et

— les figures 5a et 5b illustrent deux modes d'implantation du dispositif de l'invention sur une enceinte radio-électriquement isolée.

— la figure 6 représente schématiquement un deuxième mode de réalisation du dispositif selon l'invention,

— la figure 7 est un graphe montrant les caractéristiques dynamiques d'amorçage des deux écrêteurs des cellules d'écrêtage du dispositif de l'invention,

— la figure 8 illustre une variante de réalisation des cellules d'écrêtage dans laquelle le second écrêteur est un éclateur de type tripolaire ou à gâchette,

— la figure 9 illustre une autre variante de réalisation des cellules d'écrêtage dans laquelle chaque écrêteur se compose d'un éclateur et d'une varistance,

— la figure 10 illustre une variante de réalisation du dispositif de l'invention dans lequel les éléments du dispositif sont disposés dans différentes enceintes radio-électriquement isolées.

Dans toute la description, les mêmes éléments comportent les mêmes références.

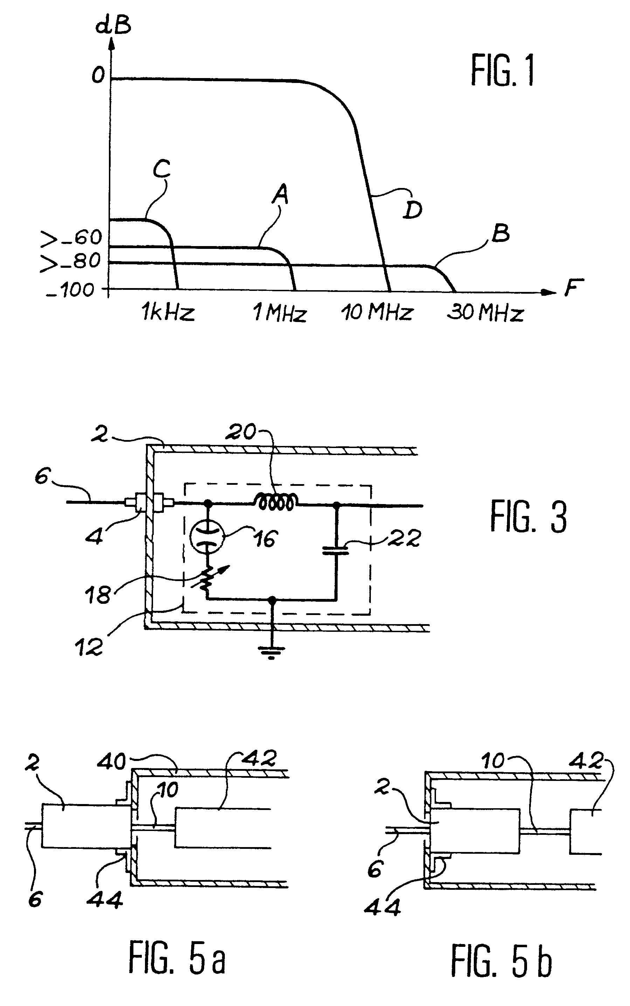

On a représenté sur la figure 1 les spectres en fréquence des signaux normalement transmis par une liaison et le spectre en fréquence correspondant à une impulsion électromagnétique intense due à la foudre. Dans le graphe de la figure 1, l'abscisse note la fréquence F et l'ordonnée l'amplitude en dB.

La courbe A est le spectre en fréquence d'un signal transmis sur une ligne téléphonique ou informatique à faible débit, et la courbe B le spectre en fréquence d'un signal numérique transmis sur une ligne informatique à fort débit. Ces signaux sont caractérisés par une amplitude faible et une largeur fréquentielle importante (entre 1 MHz et 30 MHz environ) par rapport à un signal d'alimentation électrique transmis sur une ligne d'alimentation ou de télécommande. Un tel signal, dont le spectre en fréquence est représenté par la courbe C, a une bande passante limitée à 1 kHz au plus.

Les lignes de transmission des signaux téléphoniques ou informatiques sont également utilisées pour l'émission de signaux de service, telles que la sonnerie ou le code d'appel d'un abonné dans le cas d'une ligne téléphonique. Ces signaux de service ont généralement une amplitude plus forte et une fréquence plus basse que les signaux émis normalement sur la ligne de transmission. Ceci doit être pris en compte.

On a également représenté sur la figure 1 le spectre en fréquence d'une impulsion électromagnétique intense causée par la foudre. Ce spectre correspondant à la courbe D.

Le dispositif de l'invention permet une protection des équipements électroniques par rapport à une telle impulsion électromagnétique, sans perturber les signaux normalement présents sur la ligne de transmission.

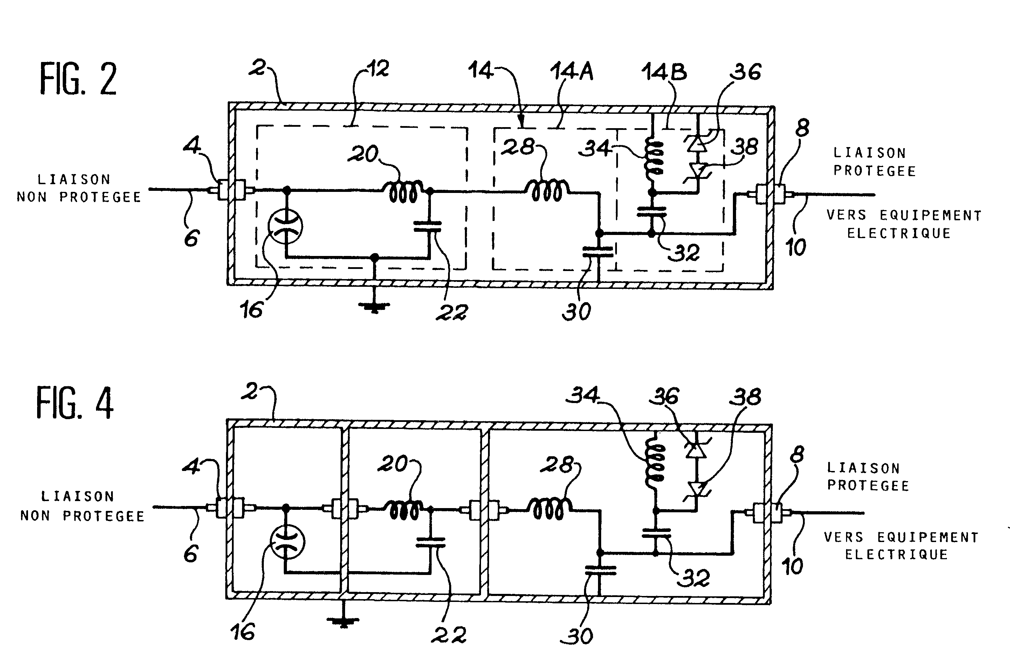

Un mode de réalisation schématique du dispositif de l'invention est représenté sur la figure 2. Ce dispositif est disposé dans une enceinte radio-électriquement isolée 2 telle qu'une cage de Faraday.

Celle-ci comprend une première ouverture 4 pour recevoir une liaison 6 non protégée des perturbations électromagnétiques et une seconde ouverture 8 de laquelle part une liaison 10 protégée des perturbations électromagnétiques, cette liaison étant reliée par son autre extrémité à un équipement électronique à protéger. Les ouvertures 4 et 8 sont réalisées selon des règles connues de l'homme de l'art de manière à maintenir l'isolement électrique à l'intérieur de l'enceinte 2.

Le dispositif de protection de l'invention se compose d'une cellule d'écrêtage 12 et d'une cellule de filtrage 14 disposées en série dans l'enceinte 2. La cellule d'écrêtage 12 a pour fonction d'écouler le maximum d'énergie de la ligne non protégée vers la terre, et la cellule de filtrage 14 a pour fonction d'adapter la bande passante au signal normalement transmis sur la ligne et de réduire la tension résiduelle non écoulée par la cellule d'écrêtage.

La cellule d'écrêtage 12 comprend un écrêteur dont une extrémité est reliée à la liaison à protéger et dont l'autre extrémité est reliée à l'enceinte 2, elle-même reliée à la terre. Cet écrêteur est par exemple un éclateur 16 et présente les caractéristiques suivantes :

— une tension d'amorçage dynamique $V_1$ faible en fonction de la pente dV/dt élevée de l'impulsion électromagnétique perturbatrice,

— un fort pouvoir d'écoulement pour absorber sans destruction les énergies dûes aux impulsions électromagnétiques intenses, telle que la foudre,

— une impédance interne faible en régime ionisé (résistance d'arc et inductance d'arc) afin de limiter la tension résiduelle de l'écrêteur.

La cellule d'écrêtage 12 comprend également un filtre passe-bas. Celui-ci est de préférence un filtre en L comprenant une inductance 20 et un condensateur 22. L'inductance 20 est reliée par une extrémité à l'ouverture 4. Le condensateur 22 est relié d'une part à l'autre extrémité de l'inductance 20 et d'autre part à la terre par l'intermédiaire de l'enceinte 2.

Le filtre passe-bas offre une grande impédance d'entrée à la pénétration des fréquences élevées. Il permet ainsi, lorsqu'une impulsion électromagnétique à front de montée rapide se présente sur la ligne, de faciliter une commutation rapide de l'écrêteur de l'étage d'entrée.

Lorsque la commutation de l'écrêteur est réalisée, les éléments parasites de celui-ci créent à ses bornes une tension résiduelle de déchet. Le filtre a également pour rôle d'écouler du courant et/ou de l'énergie non dérivé à l'écrêtage, mais aussi celui d'atténuer le niveau de tension de l'impulsion après l'écrêtage notamment dans la partie haute fréquence du spectre de l'impulsion.

Comme on l'a déjà indiqué, les signaux transmis normalement sur la ligne peuvent être accompagnés de signaux de service (sonnerie ou code d'appel dans le cas d'une ligne téléphonique) à fréquence basse mais à niveau relativement élevé.

Le niveau de tension d'un tel signal peut être suffisant pour maintenir conducteur l'écrêteur de la cellule d'écrêtage après qu'il ait été amorcé par une impulsion électromagnétique intense. Pour éviter ceci, et donc faciliter la commutation de l'écrêteur après son amorçage, il est avantageux de disposer en série avec l'éclateur 16 une varistance 18 comme représenté sur la figure 3.

Revenons maintenant à la figure 2.

La cellule de filtrage 14 comprend un filtre 14A dont la bande passante est adaptée au spectre en fréquence des signaux normalement transmis sur la ligne, et un moyen 14B de modification de la fréquence de coupure du filtre 14A.

Le filtre 14A est un filtre passe-bas en L comprenant une inductance 28 et un condensateur 30. L'inductance 28 est en série avec l'inductance 20 du module 12, et le condensateur 30 est disposé entre la liaison et la terre, en aval de l'inductance 28.

Le moyen 14B est composé en série d'un condensateur 32 et d'une inductance 34 disposées en parallèle avec le condensateur 30. Ce moyen comprend également des éléments non linéaires à seuil telles que des diodes, par exemple des diodes Zener 36 et 38 comme représenté sur la figure, disposées en parallèle avec l'inductance 34.

Le fonctionnement de la cellule de filtrage 14 est le suivant. En temps normal lorsqu'aucune impulsion électromagnétique intense n'est présente sur la ligne, la fréquence supérieure de coupure définie par le filtre 14A est supérieure à la fréquence maximale des signaux normalement transmis. La cellule de filtrage 14 n'a donc aucun effet.

Lorsqu'une impulsion électromagnétique intense apparaît sur la ligne, une partie importante de l'énergie de cette impulsion est dérivée par la cellule d'écrêtage 12. Cependant, une fraction de l'énergie de cette impulsion atteint la cellule de filtrage 14 et les diodes 36 et 38 deviennent conductrices. Le condensateur 32 est alors placé en parallèle avec le condensateur 30 ce qui diminue temporairement la bande passante du filtre 14A. Il s'ensuit une atténuation supplémentaire du signal parasite délivré par la cellule d'écrêtage 12.

Le seuil de conduction des diodes 36 et 38 doit être fixé afin que les éventuels signaux de service (code d'appel, sonnerie) ne provoque pas une mise en conduction des diodes car, si tel était le cas, les signaux de service seraient absorbés par la cellule de filtrage 14 et ne seraient plus présents en sortie du dispositif de protection. Le seuil de conduction des diodes est donc fixé à une valeur légèrement supérieure au niveau des signaux les plus intenses normalement transmis sur la ligne, corrigé par le rapport de division défini par le condensateur 32 et l'inductance 34.

Dans le cas où la liaison 6 est une ligne pour signaux numériques ayant une bande passante de quelques mégahertz, le dispositif de protection peut être constitué par exemple d'une cellule d'écrêtage telle que représentée sur la figure 2, suivie d'une cellule de filtrage telle que celle du dispositif de la figure 2. Le dispositif peut comprendre les éléments suivants :

— écrêteur 16 : écrêteur rapide
— inductance 20 : 2,2 µH
— condensateur 22 : 100 pF
— inductance 28 : 2,2 µH
— condensateur 30 : 100 pF
— condensateur 32 : 1 µF
— inductance 34 : 22 mH
— diodes 36, 38 : diodes Zener
— tension de seuil : 10 à 20 volts.

Dans ce dispositif, à titre d'exemple, la cellule d'écrêtage apporte une atténuation d'environ 40 dB, ce qui laisse une tension résiduelle de quelques centaines de volts pour une impulsion sur la ligne ayant quelques dizaines de kilovolts. L'atténuation apportée par la cellule de filtrage est d'environ 20 dB ; l'impulsion résiduelle sur la ligne n'est alors plus que de quelques dizaines de volts.

On a représenté sur la figure 4 une variante de réalisation du dispositif de l'invention. Ce dispositif comprend les mêmes éléments que celui de la figure 2. Il s'en distingue en ce que l'écrêteur 16, le filtre 20-22 et la cellule de filtrage 14 sont chacun disposé dans une enceinte radio-électriquement isolée. Cette structure permet un meilleur isolement électromagnétique des différents éléments du dispositif.

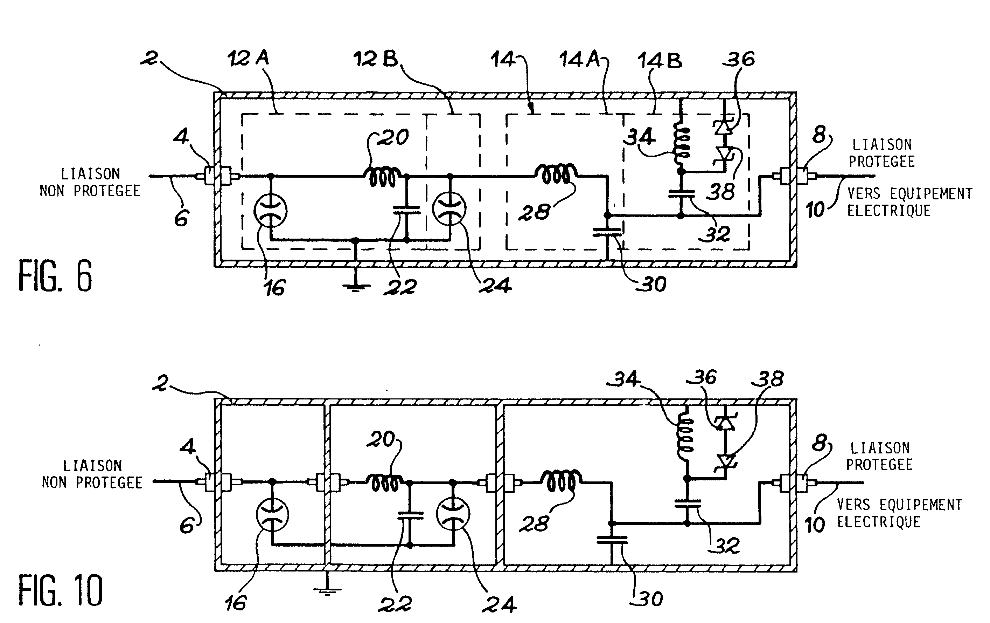

Le dispositif de protection de l'invention est destiné à protéger un équipement électronique disposé lui-même dans une enceinte radio-électriquement protégée. On a représenté sur les figures 5a et 5b deux modes d'implantation sur cette enceinte du dispositif objet de l'invention.

Sur la figure 5a, le dispositif de protection 2 de l'invention est disposé sur la face externe d'une enceinte radio-électriquement protégée 40 contenant l'équipement électronique à protéger 42.

Le dispositif de protection 2 peut être fixé sur l'enceinte 40 par tout moyen connu de l'homme de l'art et notamment, comme représenté sur la figure, au moyen d'équerres 44.

Sur la figure 5b, le dispositif de protection 2 a été fixé au moyen d'équerres 44 sur la face interne de l'enceinte 40.

Un deuxième mode de réalisation schématique du dispositif de l'invention est représenté sur la figure 6.

Selon ce deuxième mode de réalisation, le dispositif comporte une deuxième cellule d'écrêtage 12B en série entre la première 12A et le filtre passe-bande 14.

Le dispositif est disposé dans une enceinte radio-électriquement isolée 2 telle qu'une cage de Faraday.

Celle-ci comprend une première ouverture 4 pour recevoir une liaison 6 non protégée des perturbations électromagnétiques et une seconde ouverture 8 de laquelle part une liaison 10 protégée des perturbations électromagnétiques, cette liaison étant reliée par son autre extrémité à un équipement électronique à protéger. Les ouvertures 4 et 8 sont réalisées selon des règles connues de l'homme de l'art de manière à maintenir l'isolement électrique à l'intérieur de l'enceinte 2.

Les cellules d'écrêtage ont pour fonction d'écouler le maximum d'énergie de la ligne non protégée vers la terre, et la cellule de filtrage 14 a pour fonction d'adapter la bande passante au signal normalement transmis sur la ligne et de réduire la tension résiduelle non écoulée par la cellule d'écrêtage.

La deuxième cellule d'écrêtage 12B comprend un second écrêteur 24 dont une extrémité est reliée à l'autre extrémité de l'inductance 20 et dont l'autre extrémité est reliée à la terre par l'intermédiaire de l'enceinte 2.

Le filtre passe-bas offre une grande impédance d'entrée à la pénétration des fréquences élevées. Il permet ainsi, lorsqu'une impulsion électromagnétique à front de montée rapide se présente sur la ligne, de faciliter une commutation rapide de l'écrêteur de la cellule principale.

Lorsque la commutation de l'écrêteur de cette cellule est réalisée, les éléments parasites de celui-ci créent à ses bornes une tension résiduelle de déchet. Cette tension possède un spectre en fréquence qui appartient au spectre électromagnétique d'origine. Le filtre 20, 22 permet de prélever dans ce spectre une fréquence préférentielle, par résonance série. Ceci provoque une surtension aux bornes du condensateur 22 et permet d'amorcer le second écrêteur 24.

La fréquence de résonance du filtre est une fréquence légèrement supérieure à la limite supérieure du spectre en fréquence des signaux normalement transmis sur la ligne, et l'écrêteur 24 est choisi de manière à avoir une tension d'amorçage faible pour cette fréquence de résonance.

Cette structure des cellules d'écrêtage permet l'amorçage successif des deux écrêteurs 16 et 24, de sorte qu'ils participent ensemble à l'écoulement de l'énergie des fortes impulsions électromagnétiques.

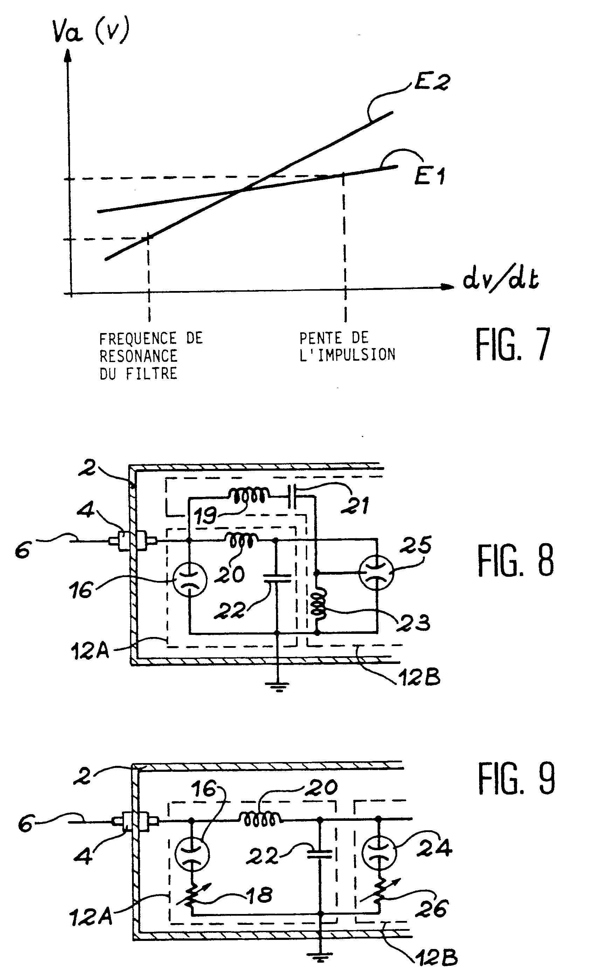

Les caractéristiques dynamiques d'amorçage des deux écrêteurs ont été représentées sur le graphe de la figure 7. Les courbes $E_1$ et $E_2$ des tensions d'amorçage des écrêteurs 16 et 24 indique la tension d'amorçage $V_a$ en fonction de la pente $dV/dt$ du signal d'impulsion reçu.

Ces deux courbes sont différentes. L'écrêteur 16 a une tension d'amorçage faible pour les impulsions de pente élevée, ce qui permet de dériver une partie importante de l'énergie d'une impulsion électromagnétique. Le deuxième écrêteur 24 reçoit donc une impulsion d'intensité plus faible et ayant également une pente moins élevée. Il doit donc avoir une tension d'amorçage faible pour une pente d'impulsion plus faible. Son amorçage est aidé par le filtre constitué de l'inductance 20 et du condensateur 22 qui créé précisément une surtension dans la partie basse fréquence du signal d'impulsion résiduel.

Sur le graphe de la figure 7, on a indiqué des exemples de caractéristiques d'amorçage $E_1$ et $E_2$ pour les écrêteurs 16 et 24. Les écrêteurs sont choisis en fonction de l'application particulière visée, notamment les caractéristiques (fréquence et intensité) des signaux utiles transmis sur la ligne.

On a représenté sur la figure 8 une variante de réalisation des cellules d'écrêtage du dispositif de l'invention qui diffère des cellules d'écrêtage du dispositif de la figure 2 en ce que le second écrêteur est un éclateur 25 de type tripolaire ou à gâchette.

Sur cette gâchette est appliquée une impulsion, prélevée sur l'entrée 4, de polarité inverse de celle appliquée sur l'électrode chaude (c'est-à-dire reliée à la ligne 6) de l'éclateur 25. Ceci permet de faciliter et d'améliorer l'amorçage de ce second écrêteur, ce qui est souhaitable en particulier lorsque la tension résiduelle délivrée par le premier écrêteur est un peu faible.

Un montage comprenant en série une inductance 19, un condensateur 21 et une inductance 23 est disposé en parallèle avec le premier éclateur 16. La tension appliquée sur la gâchette est prélevée au point commun du condensateur 21 et de l'inductance 23.

Les cellules d'écrêtage représentées sur les figures 2 et 4 sont bien adaptées au cas où la ligne ne transmet que des signaux ayant une faible intensité.

Cependant, comme on l'a déjà indiqué, les signaux transmis normalement sur la ligne peuvent être accompagnés de signaux de service (sonnerie ou code d'appel dans le cas d'une ligne téléphonique) à fréquence basse mais à niveau relativement élevé.

Le niveau de tension d'un tel signal peut être suffisant pour maintenir conducteur les écrêteurs de la cellule d'écrêtage après qu'ils aient été amorcés par une impulsion électromagnétique intense. Pour éviter ceci, et donc faciliter la commutation de l'écrêteur après son amorçage, il est avantageux de disposer en série avec les éclateurs 16 et 24 des varistances 18 et 26 comme représenté sur la figure 9.

Revenons maintenant à la figure 6.

La cellule de filtrage 14 comprend le filtre 14A dont la bande passante est adaptée au spectre en fréquence des signaux normalement transmis sur la ligne, et le moyen 14B de modification de la fréquence de coupure du filtre 14A.

Le filtre 14A est un filtre passe-bas en L identique à celui décrit à propos de la figure 2 avec l'inductance 20 du module 12A, et le condensateur 30 est disposé entre la liaison et la terre, en aval de l'inductance 28.

Tout comme dans le cas de la figure 2, le moyen 14B n'est pas nécessaire dans toutes les applications. Il est surtout intéressant pour les lignes transmettant des signaux de fréquence supérieure à 1 MHz, telles que les lignes numériques. La structure du filtre 14A dépend également de la ligne. L'inductance 28 peut avantageusement être remplacée par une résistance pour les lignes transmettant des signaux de fréquence inférieure à 1 kHz.

Le moyen 14B représenté sur la figure 6 est identique à celui représenté sur la figure 2.

On a représenté sur la figure 10 une variante de réalisation du dispositif de l'invention. Ce dispositif comprend les mêmes éléments que celui de la figure 6. Il s'en distingue en ce que le premier écrêteur 16, l'ensemble constitué par le filtre 20, 22 et le second écrêteur 24 et la cellule de filtrage 14 sont chacun disposé dans une enceinte radio-électriquement isolée. Cette structure permet un meilleur isolement électromagnétique des différents éléments du dispositif.

Dans le cas où la liaison 6 est une ligne pour signaux numériques ayant une bande passante de quelques mégahertz, le dispositif de protection peut être constitué par exemple d'une cellule d'écrêtage telle que représentée sur la figure 4 suivie d'une cellule de filtrage telle que celle du dispositif de la figure 2.

Dans le cas où la liaison 6 est une liaison téléphonique ayant une bande passante de quelques kilohertz, le dispositif de protection peut être constitué par exemple d'une cellule d'écrêtage telle que représentée sur la figure 4 suivie d'une cellule de filtrage composée uniquement du filtre 14A du dispositif de la figure 2. Le dispositif peut comprendre les éléments suivants :

— écrêteur 16 : écrêteur rapide

— écrêteur 25 : écrêteur rapide tripolaire ou à gâchette

— inductance 19 : 0,5 $\mu$H
— inductance 20 : 2,2 $\mu$H
— condensateur 21 : 50 pF
— condensateur 22 : 100 pF
— inductance 23 : 1,5 $\mu$H
— inductance 28 : 22 $\mu$H
— condensateur 30 : 100 pF

Le dispositif de protection de l'invention est destiné à protéger un équipement électronique disposé lui-même dans une enceinte radio-électriquement protégée.

Le dispositif de protection 2 ou 6 peut être fixé sur l'enceinte 40 par tout moyen connu de l'homme de l'art et notamment, comme représenté sur la figure, au moyen d'équerres 44.

Dans le cas d'un équipement électronique sur lequel sont connectées plusieurs lignes de transmission et/ou d'alimentation, un dispositif de protection conforme à l'invention est disposé sur chaque ligne. Ainsi, par exemple, pour des liaisons téléphoniques bifilaires, deux dispositifs de protection sont utilisés et pour des liaisons numériques quadrifilaires de type MIC, quatre dispositifs de protection sont utilisés. Le montage de ces dispositifs peut être dans ces cas effectué dans un même boîtier comme représenté sur les figures 4 et 10.

## Revendications

1. Dispositif de protection d'un équipement électronique (42) contre les fortes impulsions électromagnétiques, ledit équipement étant contenu dans une enceinte (40) radio-électriquement isolée et étant relié à une ligne extérieure à ladite enceinte, ledit dispositif de protection étant disposé dans une autre enceinte (2) radio-électriquement isolée et comprenant une entrée (4) reliée à ladite ligne (6) et une sortie (8) reliée audit équipement, ledit dispositif comprenant en série :

— au moins une première cellule d'écrêtage (12A) comprenant un écrêteur, ayant une extrémité reliée à l'entrée de ladite cellule d'écrêtage et une autre extrémité à la terre, et un filtre passe-bas disposé entre l'entrée et la sortie de ladite cellule d'écrêtage,

— une cellule de filtrage (14) comprenant un filtre passe-bas (14A), et

— une deuxième cellule d'écrêtage (12B) comprenant un second écrêteur ayant une extrémité reliée à la sortie de ladite cellule d'écrêtage et une autre extrémité à la terre, l'écrêteur de cette deuxième cellule et l'écrêteur de la première cellule ayant des caractéristiques dynamiques d'amorçage différentes caractérisé en ce que le filtre passe-bas de la première cellule d'écrêtage créant, pour une fréquence de résonance supérieure à la fréquence maximale contenue dans les signaux normalement transmis sur la ligne, une surtension aux bornes du second écrêteur, ce second écrêteur étant du type tripolaire ou à gâchette (25).

2. Dispositif selon la revendication 1, caractérisé en ce que le filtre passe-bas de la première cellule d'écrêtage (12A) est un filtre en L (20, 22).

3. Dispositif selon la revendication 1 ou 2, caractérisé en ce que la deuxième cellule d'écrêtage (12B) comprend en outre un filtre passe-haut, composé en série d'une inductance (19), d'un condensateur (21) et d'une inductance (23), connecté entre l'entrée de la cellule d'écrêtage principale et la terre, la gâchette du second éclateur étant reliée au point commun entre le condensateur (21) de l'inductance (23).

4. Dispositif selon l'une quelconque des revendications 1 à 3, caractérisé en ce qu'une varistance (18, 26) est en outre disposée entre chaque éclateur et la terre.

5. Dispositif selon l'une quelconque des revendications 1 à 4, caractérisé en ce que la cellule de filtrage (14) comporte en outre un moyen de commutation (14B) de la fréquence de coupure du filtre passe-bas (14A) en série avec ce dernier.

6. Dispositif selon la revendication 5, caractérisé en ce que le moyen de commutation (14B) comprend en série un condensateur (32) et une inductance (34) disposés entre la ligne et la terre, et des éléments à seuil de conduction aux bornes de l'inductance, le seuil étant fixé de manière qu'il y ait conduction desdits éléments lorsque le signal sur la ligne a une amplitude supérieure à l'amplitude maximale des signaux normalement transmis sur la ligne.

7. Dispositif selon la revendication 6, caractérisé en ce que les éléments à seuil sont des diodes (36, 38).

8. Dispositif selon l'une quelconque des revendications 1 à 7, caractérisé en ce que le premier écrêteur, l'ensemble constitué du filte de la cellule d'écrêtage principale et du second écrêteur, et la cellule de filtrage sont chacun contenus dans une enceinte radio-électriquement isolée.

## Patentansprüche

1. Vorrichtung zum Schutz einer elektronischen Einrichtung (42) gegen starke elektromagnetische Impulse, wobei die Einrichtung in einer radioelektrische isolierten Hülle (40) untergebracht ist und mit einer äußeren Leitung mit der Hülle verbunden ist, wobei Schutzvorrichtung in einer weiteren, radioelektrisch isolierten Hülle (2) angeordnet ist und einen mit der Leitung (6) verbundenen Eingang (4) und einen mit der Einrichtung verbundenen (8) Ausgang umfaßt, wobei die Vorrichtung in Reihe umfaßt :

    — wenigstens eine erste Begrenzerzelle (12A) mit einem Begrenzer, von dem ein Ende mit dem Eingang der Begrenzerzelle und ein anderes Ende mit der Erde verbunden ist, und mit einem Tiefpaßfilter, das zwischen dem Eingang und dem Ausgang der Begrenzerzelle angeordnet ist,

    — eine Filterzelle (14) mit einem Tiefpaßfilter (14A), und

    — einer zweiten Begrenzerzelle (12B) mit einem zweiten Begrenzer, von dem ein Ende mit dem Ausgang der Begrenzerzelle und ein anderes Ende mit der Erde verbunden ist, wobei der Begrenzer dieser zweiten Zelle und der Begrenzer der ersten Zelle unterschiedliche dynamische Durchschlagscharakteristiken besitzen, dadurch gekennzeichnet, daß das Tiefpaßfilter der ersten Zelle für eine Resonanzfrequenz, die über der maximalen, in den normalerweise auf der Leitung übertragenen Signalen enthaltenen Frequenz liegt, eine Überspannung an den Klemmen des zweiten Begrenzers erzeugt, wobei dieser zweite Begrenzer vom tripolaren oder gattergesteuerten Typ ist.

2. Vorrichtung nach Anspruch 1, dadurch gekennzeichnet, daß das Tiefpaßfilter der ersten Begrenzerzelle (12A) ein L-Filter (20, 22) ist.

3. Vorrichtung nach Anspruch 1 oder 2, dadurch gekennzeichnet, daß die zweite Begrenzerzelle (12B) außerdem ein Hochpaßfilter umfaßt, das in Reihe aus einer Induktanz (19), einem Kondensator (21) und einer Induktanz (23) besteht und zwischen dem Eingang der Hauptbegrenzerzelle und der Erde angeschlossen ist, wobei das Gatter des zweiten Begrenzers mit einem gemeinsamen Punkt zwischen dem Kondensator (21) und der Induktanz (23) angeschlossen ist.

4. Vorrichtung nach einem der Ansprüche 1 bis 3, dadurch gekennzeichnet, daß außerdem ein Varistor (18, 26) zwischen jedem Begrenzer und der Erde angeschlossen ist.

5. Vorrichtung nach einem der Ansprüche 1 bis 4, dadurch gekennzeichnet, daß die Filterzelle (14) außerdem eine Schaltvorrichtung (14B) für die Abschneidefrequenz des Tiefpaßfilters (14A), die mit letzterem in Reihe geschaltet ist, aufweist.

6. Vorrichtung nach Anspruch 5, dadurch gekennzeichnet, daß die Schaltvorrichtung (14B) in Reihenschaltung einen Kondensator (32) und eine Induktanz (34), die zwischen der Leitung und der Erde angeordnet sind, und Leitungsschwellelemente an den Klemmen der Induktanz aufweist, wobei die Schwelle so festgelegt ist, daß es ein Leiten der Elemente gibt, wenn das Signal auf der Leitung eine Amplitude besitzt, die größer ist als die maximale Amplitude der normalerweise auf der Leitung übertragenen Signale.

7. Vorrichtung nach Anspruch 6, dadurch gekennzeichnet, daß die Schwellelemente Dioden (36, 38) sind.

8. Vorrichtung nach einem der Ansprüche 1 bis 7, dadurch gekennzeichnet, daß der erste Begrenzer, die aus dem Filter der Hauptbegrenzerzelle und dem zweiten Begrenzer bestehende Anordnung und die Filterzelle jeweils in einer radioelektrisch isolierten Hülle enthalten sind.

## Claims

1. Device for protecting electronic equipment (42) against strong electromagnetic pulses, the equipment being contained in a radioelectrically insulated enclosure (40) and connected to a line outside the enclosure, the protective device being disposed in another radioelectrically insulated enclosure (2) and comprising an input (4) connected to said line (6) and an output (8) connected to the equipment, the device comprising in series :
   at least one first clipping cell (12A) comprising a clipper having one end connected to the input of the clipping cell and another end to ground, and a low-pass filter disposed between the input and the output of the clipping cell, and
   a filtering cell (14) comprising a low-pass filter (14a) and a second clipping cell (12B) comprising a second clipper having one end connected to the input of the clipping cell and another end to ground, the clipper of the second cell and the clipper of the first cell having different dynamic triggering characteristics, characterized in that the low-pass filter of the first clipping cell creating an overvoltage at the terminals of the second clipper for a resonance frequency higher than the maximum frequency contained in the signals normally transmitted on the line, said clipper being of the tripolar or gate type (25).

2. Device according to claim 1, characterized in that the low-pass filter of the first clipping cell (12A) is an L filter (20, 22).

3. Device according to claims 1 or 2, characterized in that the second clipping cell (12B) also comprises a high-pass filter made up in series of an inductance (19), a capacitor (21) and an inductance (23) and connected between the input of the main clipping cell and ground, the gate of the second discharger being connected to the common point between the capacitor (21) and the second-mentioned inductance (23).

4. Device according to any one of the claims 1 to 3, characterized in that a varistor (18, 26) is also disposed between each discharger and ground.

5. Device according to any one of the claims 1 to 4, characterized in that the filtering cell (14) also comprises a means (14B) for switching the cut-off frequency of the low-pass filter (14A) in series therewith.

6. Device according to claim 5, characterized in that the switching means (14B) comprises in series a capacitor (32) and an inductance disposed between the line and ground, and elements with a conduction threshold at the terminals of the inductance, the threshold being so determined that said elements are conductive when the signal on the line has an amplitude higher than the maximum amplitude of the signals normally transmitted on the line.

7. Device according to claim 6, characterized in that the threshold elements are diodes (36, 38).

8. Device according to any one of the claims 1 to 7, characterized in that the first clipper, the assembly formed by the filter of the main clipping cell and the second clipper, and the filterinag cell are each contained in a radioelectrically insulated enclosure.

FIG. 1

FIG. 3

FIG. 5 a

FIG. 5 b

9

# FIG. 2

2  12  14  14-A  14-B  36

4

LIAISON
NON PROTEGEE

6

20

28

34

32

8

LIAISON
PROTEGEE

38

10

VERS EQUIPEMENT
ELECTRIQUE

16

22

30

# FIG. 4

2

4

LIAISON
NON PROTEGEE

6

20

28

34  36  38

32

8

LIAISON
PROTEGEE

10

VERS EQUIPEMENT
ELECTRIQUE

16

22

30

EP 0 296 054 B1

FIG. 6

LIAISON
NON PROTEGEE

LIAISON
PROTEGEE

VERS EQUIPEMENT
ELECTRIQUE

FIG. 10

LIAISON
NON PROTEGEE

LIAISON
PROTEGEE

VERS EQUIPEMENT
ELECTRIQUE

EP 0 296 054 B1

Va (v)

E2

E1

dv/dt

FREQUENCE DE
RESONANCE
DU FILTRE

PENTE DE
L'IMPULSION

FIG. 7

FIG. 8

FIG. 9